# EUROPÄISCHE PATENTANMELDUNG

(11) **EP 2 360 382 A2**
(43) Veröffentlichungstag der Anmeldung: **24.08.2011**
(21) Anmeldenummer: 10192659.0
(22) Anmeldetag: 26.11.2010
(51) Int. Cl.: F16C 19/48, F16C 19/54, F16C 33/46

(54) **Lagerkombination zur radialen und axialen Abstützung insbesondere für ein Los- oder Zwischenrad in einem Getriebe**

(30) Priorität: 11.02.2010 DE 102010007706
(71) Anmelder: Schaeffler Technologies GmbH & Co. KG, 91074 Herzogenaurach (DE)
(72) Erfinder: Sarrach, Roland, 91325 Aisch (DE)

(57) **Zusammenfassung**

Der Erfindung liegt die Aufgabe zugrunde, eine Lagerkombination vorzuschlagen, die eine hohe Montagefreundlichkeit aufweist.

Diese Aufgabe wird durch eine Lagerkombination 1 mit einem Radiallager 4, wobei das Radiallager 4 einen Radialkranz 9 sowie eine oder mehreren Reihen von Nadelrollen 8, Nadeln und/oder Rollen - nachfolgend zusammenfassend als Nadelrollen bezeichnet - aufweist, und mit einem Axiallager 5, wobei das Axiallager 5 einen Axialkranz 13 sowie eine oder mehrere Reihen von Nadelrollen 8, Nadeln oder Rollen - nachfolgend zusammenfassend als Nadelrollen bezeichnet - aufweist, gelöst, wobei das Radiallager 4 und das Axiallager 5 ausgebildet sind, einen Lagerpartner 2 in einer axialen und in einer radialen Richtung abzustützen und wobei das Radiallager 4 mit dem Axiallager 5 über Haltemittel 19 verliersicher verbunden und/oder verbindbar ist.

## Beschreibung

Die Erfindung betrifft eine Lagerkombination mit einem Radiallager, wobei das Radiallager einen Radialkranz sowie eine oder mehrere Reihen von Nadelrollen, Nadeln und/oder Rollen - nachfolgend zusammenfassend als Nadelrollen bezeichnet - aufweist, und mit einem Axiallager, wobei das Axiallager einen Axialkranz sowie eine oder mehrere Reihen von Nadelrollen, Nadeln und/oder Rollen - nachfolgend zusammenfassend als Nadelrollen bezeichnet - aufweist, wobei das Radiallager und das Axiallager ausgebildet sind, einen Lagerpartner in einer axialen und einer radialen Richtung abzustützen.

In Kraftfahrzeuggetrieben werden Losräder oder Zwischenräder oftmals über Radialnadellager gelagert. Die Radialnadellager zeichnen sich durch eine sehr geringe Bauhöhe bei gleichzeitiger hoher Belastbarkeit für radiale Belastungen aus.

Beispielsweise zeigt die Druckschrift DE 10 2004 009 472 A1 ein Kraftfahrzeuggetriebe mit einem Zahnrad, welches über ein zweireihiges Radialnadellager auf einer Welle gelagert ist. In axialer Richtung stößt das Zahnrad auf der einen Seite an eine Wellenschulter der Welle und auf der anderen Seite an eine Anlaufscheibe an.

Die Druckschrift DE 100 020 26 A1 zeigt ebenfalls eine Wälzlageranordnung, insbesondere Radiallagerung, mit zwei Reihen von zylindrischen Wälzkörpern, insbesondere Nadeln. Auch diese Wälzlageranordnung dient zur Lagerung eines Zwischenzahnrades einer Zahnradstufe zur Bildung des Rückwärtsganges in einem Fahrzeuggetriebe. Das Besondere bei dieser Wälzlageranordnung ist, dass die zwei Käfige bzw. die Nadelkränze der zwei Reihen von zylindrischen Wälzkörpern über eine lösbare Verbindung zur Herstellung eines vormontierten Lagerzustandes unmittelbar miteinander in Verbindung bringbar sind.

Die japanische Druckschrift JP02163509A zeigt dagegen die Lagerung eines Zahnrades mit einem Radialnadellager und einem Axiallager, welche gemeinsam das Zahnrad gegen radiale bzw. axiale Belastungen abstützen.

In ähnlicher Weise zeigt die Druckschrift DE 100 37 401 A1, die wohl den nächstkommenden Stand der Technik bildet, eine Schalteinrichtung, wobei aus der Figur 1 dieser Druckschrift ein Zahnrad ersichtlich ist, welches auf einer Welle über eine Wälzlageranordnung gelagert. Die Wälzlageranordnung weist zwei Reihen eines Radialnadellagers sowie beidseitig jeweils ein Axialnadellager auf, die das Zahnrad in radialer Richtung abstützen.

### Beschreibung

Der Erfindung liegt die Aufgabe zugrunde, eine Lagerkombination vorzuschlagen, die eine hohe Montagefreundlichkeit aufweist. Diese Aufgabe wird durch eine Lagerkombination mit den Merkmalen des Anspruches 1 gelöst. Bevorzugte oder vorteilhafte Ausführungsformen der Erfindung ergeben sich aus den Unteransprüchen, der nachfolgenden Beschreibung sowie den beigefügten Figuren.

Im Rahmen der Erfindung wird eine Lagerkombination, umfassend mindestens ein Radiallager und mindestens ein Axiallager, vorgestellt, wobei sowohl das Radiallager als auch das Axiallager als ein Nadel-, Nadelrollen oder Rollenlager ausgebildet sind. Vorzugsweise wird bei einem Verhältnis von Länge zu Durchmesser des Wälzkörpers von bis zu 3:1 von einer Rolle, von bis zu 5:1 von einer Nadelrolle und darüber von einer Nadelrolle gesprochen. Alternativ oder ergänzend weisen die Wälzkörper einen Durchmesser kleiner als 4 mm, vorzugsweise kleiner 3 mm und insbesondere kleiner 2 mm auf.

Das Radiallager umfasst einen Radialkranz, insbesondere Radialnadelkranz, sowie eine oder mehrere Reihen von Nadelrollen, Nadeln und/oder Rollen - nachfolgend zusammenfassend als Nadelrollen bezeichnet - und das Axiallager einen Axialkranz, insbesondere Axialnadelkranz, sowie ebenfalls eine oder mehrere Reihen von Nadelrollen, Nadeln und/oder Rollen - nachfolgend zusammenfassend als Nadelrollen bezeichnet -. Sowohl das Radiallager als auch das Axiallager können ein- oder mehrfach bzw. ein oder mehrreihig in der Lagerkombination vorhanden sein. Insbesondere weisen sowohl der Axialkranz als auch der Radialkranz Taschen für die Nadelrollen auf.

Das Radiallager und das Axiallager sind ausgebildet, einen Lagerpartner in einer radialen bzw. axialen Richtung abzustützen, insbesondere zu lagern. Die Richtungsbezeichnung radial und axial bezieht sich insbesondere auf eine Rotationsachse des Lagerpartners. Insbesondere sind Radiallager und Axiallager unmittelbar benachbart zueinander angeordnet. Das Radiallager kann eine Hülse oder Buchse aufweisen, im einfachsten Fall ist das Radiallager auf den Radialkranz und die Nadelrollen begrenzt, die dann unmittelbar auf dem Lagerpartner oder einem Gegenlagerpartner, wie z.B. einer Welle abwälzen. Auch das Axiallager ist im einfachsten Fall auf den Axialkranz und die Nadelrollen begrenzt, die ebenfalls unmittelbar auf dem Lagerpartner und auf einem oder dem Gegenlagerpartner abwälzen.

Im Rahmen der Erfindung wird vorgeschlagen, dass das Radiallager mit dem Axiallager über Haltmittel verliersicher verbunden und/oder verbindbar ist. Insbesondere sind das Radiallager und das Axiallager unter Ausschluss des Lagerpartners miteinander verbunden. Die Haltemittel ermöglichen insbesondere die Herstellung eines vormontierten Zustandes der Lagerkombination mit gekoppelten Radiallager und Axiallager, in dem die Lagerkombination auf dem Lagerpartner aufsetzbar ist.

Es ist dabei eine Überlegung der Erfindung, dass die Montage von Radiallagern und Axiallagern üblicherweise in mehreren Schritten erfolgt, wobei eine Fixierung des Radiallagers auf dem Lagerpartner oftmals nicht gegeben ist. Durch die fehlende Fixierung kann das Radiallager wieder abrutschen, beschädigt werden oder - im ungünstigsten Fall - bei der Montage vergessen werden oder verloren gehen. Demgegenüber weist die erfindungsgemäße Lagerkombination Haltemittel auf, über die das Radiallager und das Axiallager verliersicher miteinander verbunden und/oder verbindbar sind, so dass die geschilderten Montagefehler ausgeschlossen sind

Besonders bevorzugt sind die Haltemittel so ausgebildet, dass Radiallager und Axiallager lösbar miteinander verbunden sind, so dass bei Reparaturen der Lagerkombination Axiallager oder Radiallager selektiv ausgetauscht werden können. Die lösbare Verbindung ist funktionell vorzugsweise so ausgebildet, dass sich in jeder Richtung eine formschlüssige Verbindung zwischen dem Radiallager und dem Axiallager ergibt.

Die zugrunde liegende Überlegung der Erfindung wird nochmals dadurch verdeutlicht, dass bevorzugt vorgesehen ist, dass das Radiallager und/oder das Axiallager bereits zu Montagezwecken und/oder in der Einbausituation über die Haltemittel verliersicher verbunden sind. Somit ist die Lagerkombination bevorzugt als eine selbsthaltende einbaufertige Baueinheit ausgebildet.

Bei einer konstruktiven Ausgestaltung der Erfindung ist der Radialkranz mit dem Axialkranz über die Haltemittel vorzugsweise unmittelbar miteinander verliersicher verbunden und/oder verbindbar. Diese konstruktive Ausgestaltung ist besonders vorteilhaft, sofern Radiallager bzw. Axiallager keine Hülse bzw. Laufscheibe aufweisen und somit im Wesentlichen oder nur aus den Kränzen sowie den Nadelrollen bestehen.

In Fortführung der bevorzugten konstruktiven Ausgestaltung kann vorgesehen sein, dass das Axiallager, insbesondere der Axialkranz, auf dem Radiallager, insbesondere auf den Radialkranz, in einer axialen Richtung aufgesteckt ist. Bei der Verbindung zwischen Radiallager und Axiallager wird somit das Radiallager, insbesondere der Radialkranz, in axialer Richtung in oder sogar durch das Axiallager oder den Axialkranz auf-, ein- bzw. durchgesteckt. Besonders bevorzugt sind die Haltmittel so ausgebildet, dass das Axiallager, insbesondere der Axialkranz, gegen ein Lösen gegen die axiale Aufsteckrichtung gesichert ist. Anders ausgedrückt, kann das Radiallager, insbesondere der Radialkranz, nicht mehr ohne Widerstand in Gegenrichtung aus dem Axiallager, insbesondere aus dem Axialkranz, herausgezogen werden. Durch diese mechanische Kopplung ist eine verliersichere Verbindung zum einen zu den genannten Montagezuwecken und zum anderen im montierten Zustand, also in der Einbausituation der Lagerkombination gegeben.

Bei einer vorteilhaften Weiterbildung sind die Haltemittel an dem Radialkranz angeordnet und insbesondere einstückig angeformt, wobei die Haltemittel in oder an dem Axialkranz angreifen. Insbesondere bei einer einstückig angeformten Ausführungsform können auch die Haltemittel bei der Montage nicht verloren gehen und zudem kostengünstig zusammen mit dem Radialkranz gefertigt werden. Prinzipiell ist es aber auch möglich, dass die Haltemittel an dem Axialkranz oder an beiden Kränzen angeformt oder eingebracht sind.

Bei einer möglichen Ausbildung der Erfindung sind die Haltemittel als Schnappnasen und/oder als Schnappnasenbereiche ausgebildet, die an dem Axiallager, insbesondere an dem Axialkranz angreifen. Es kann sich hierbei um einzelne Schnappnasen oder auch um Schnappnasenbereiche handeln, welche in Umlaufrichtung beispielsweise mehr als 60°, vorzugsweise mehr als 90° und insbesondere bis zu 180 ° umlaufend ausgebildet sind. In nachfolgenden wird auf Schnappnasen verwiesen, es kann sich jedoch auch um die Schnappnasenbereiche handeln.

Für eine elastische und/oder nachgiebige Aufnahme der Schnappnasen auf oder an dem Radialkranz ist es bevorzugt, dass die Schnappnasen auf Zungen angeordnet sind bzw. diese umfassen, welche in radialer Richtung nachgiebig ausgebildet sind.

Besonders bevorzugt sind die Schnappnasen bzw. -bereiche nach radial außen gerichtet, so dass diese von radial innen das Axiallager, insbesondere den Axialnadelkranz, haltend umgreifen.

Bei einer ersten möglichen Ausführungsform der Erfindung sind die Haltemittel, insbesondere die Schnappnasen, frei abstehend zu dem Radialkranz ausgebildet. Hierbei bilden die Haltemittel, insbesondere die Schnappnasen, zugleich die axialen Randbereiche des Radialkranzes. Da jedoch im Betrieb üblicher Weise auch der Radialkranz gegen eine seitliche, das heißt axiale, Begrenzung anlaufen kann, sind die Schnappnasen in dieser Ausführungsform einer erhöhten Belastung ausgesetzt. Verbesserungen können hier erreicht werden, wenn die Haltemittel, insbesondere die Schnappnasen, durch Schutzeinrichtungen gegen diese Belastung gesichert sind.

In einer hinsichtlich der Belastbarkeit verbesserten möglichen Ausführungsform weist der Radialkranz Fensterbereiche auf, in denen die Haltemittel, insbesondere die Schnappnasen, angeordnet sind. An der axialen Außenseite des Radialkranzes ist somit ein durchgängiger Randbereich als Schutzeinrichtung gegeben, der quasi wie ein Stoßfänger gegen eine axiale Begrenzung, wie zum Beispiel eine Wellenschulter oder eine Anlaufscheibe, anlaufen kann. Eine andere Ausbildung der Schutzeinrichtung kann beispielsweise durch einzelne axial ausgerichtete Schutzelemente gebildet werden.

Prinzipiell ist es möglich, dass der Radialkranz und/oder der Axialkranz aus einem beliebigen Material, insbesondere Metall, wie zum Beispiel aus Messing, aus einer Aluminiumlegierung oder aus Stahl gefertigt sein können. Es ist jedoch bevorzugt, dass der oder die Kränze aus einem Kunststoff, ggfs. glasfaserverstärkt gefertigt sind, so dass auch die Haltemittel in einem einfachen und damit kostengünstigen Produktionsprozess, wie z.B. Spritzguss, gemeinsam mit dem Kranz hergestellt werden können.

In einer allgemeinen Ausprägung der Erfindung ist es denkbar, dass die Nadelrollen des Radiallager und/oder des Axiallagers unmittelbar auf Laufbahnen des Lagerpartners bzw. des Gegenlagerpartners abrollen bzw. abwälzen. Bei einer bevorzugten Ausführungsform der Erfindung kann jedoch vorgesehen sein, dass das Axiallager ein- oder beidseitig zu dem Axialkranz eine Laufscheibe aufweist, insbesondere um eine Feinstbearbeitung der Laufbahnen an dem Lagerpartner bzw. dem Gegenlagerpartner einsparen zu können.

In einer Weiterbildung der Erfindung ist vorgesehen, dass die Lagerkombination ein weiteres Axiallager aufweist, welches vorzugsweise ebenso wie das oben beschriebene Axiallager oder als eine oben beschriebene Variation des oben beschriebenen Axiallagers ausgebildet ist. Die beiden Axiallager sind beidseitig zu dem Radiallager angeordnet. Das weitere Axiallager kann mit dem Radiallager über weitere Haltemittel verliersicher verbunden und/oder verbindbar sein, wobei das Axiallager und die Haltemittel in einer beliebigen Ausführungsform, wie sie zuvor beschrieben wurde, bzw. nach einem der vorhergehenden Ansprüche, ausgebildet sein kann.

Bei einem bevorzugten Einsatzgebiet der Erfindung ist der Lagerpartner als ein Losrad oder ein Zwischenrad - nachfolgend zusammenfassend auch Rad genannt - eines Fahrzeuggetriebes ausgebildet, wobei das Radiallager das Rad gegenüber einer Welle lagert und das Axiallager das Rad z.B. gegenüber einer Wellenschulter oder einer Anlaufscheibe lagert.

Bei einer konstruktiven Ausgestaltung der Erfindung ist vorgesehen, dass die Lagerkombination in der Einbausituation hinsichtlich möglicher Toleranzen im Betrieb so aufgenommen bzw. entsprechend ausgebildet ist, dass die Haltemittel und das Axiallager oder das Radiallager berührungsfrei laufen. Je nachdem ob die Haltemittel an dem Axiallager oder an dem Radiallager festgelegt sind, ist das andere Lager berührungsfrei zu den Haltemitteln angeordnet, um Beschädigungen zu vermeiden. In einer konkreten Ausführungsform, bei der die Haltemittel an dem Radiallager, insbesondere an dem Radialkranz, angeordnet sind, ist das Axiallager, insbesondere der Axialkranz im Betrieb berührungsfrei zu den Haltemittel positioniert. In der Einbausituation am Rad, erfolgt die Führung des oder der Axiallager in radialer Richtung im Rad, um den Kontakt und somit Verschleiß an den Haltemitteln, insbesondere an den Schnappnasen, zu vermeiden.

Weitere Merkmale, Vorteile und Wirkungen der Erfindung ergeben sich aus der nachfolgenden Beschreibung eines bevorzugten Ausführungsbeispiels der Erfindung sowie den beigefügten Figuren. Dabei zeigen:
- Figur 1: eine schematische Schnittansicht einer Lagerkombination als ein erstes Ausführungsbeispiel der Erfindung;
- Figur 2: eine Abwicklung des Radialnadelkranzes in der Figur 1;
- Figur 3: eine Abwicklung des Radialnadelkranzes in der Figur 1 in einer alternativen Ausführungsform.

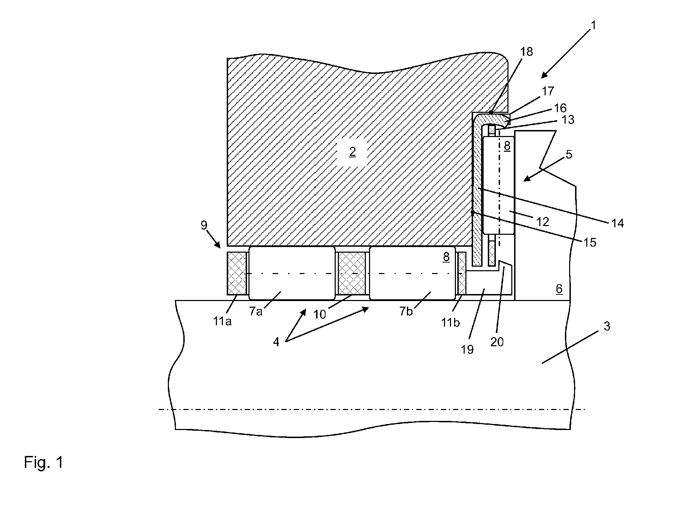

Die Figur 1 zeigt in einer schematischen Querschnittdarstellung eine Lagerkombination 1, bei der ein Zahnrad 2, insbesondere ein Losrad oder Zwischenrad eines Fahrzeuggetriebes, auf einer Welle 3 gelagert ist. Dabei umfasst die Lagerkombination 1 ein Radiallager 4 und ein Axiallager 5, wobei das Radiallager 4 das Zahnrad 2 in radialer Richtung gegenüber der Welle 3 abstützt und das Axiallager 5 das Zahnrad 2 in axialer Richtung gegen eine Wellenschulter 6 lagert.

Eine derartige Lagerkombination 1 wird beispielsweise in dem Fahrzeuggetriebe eingesetzt, um das als Losrad ausgebildete Zahnrad 2 des beispielsweise oder vorzugsweise ersten Ganges in Schaltrichtung des ersten Ganges mit dem Axiallager 5 abzustützen, um das Einlegen des ersten Ganges bei stehendem Fahrzeug zu erleichtern. Bei einem anderen Anwendungsbeispiel wird das Zahnrad des vorzugsweisen 1. Ganges auch als Zwischenrad zum Rückwärtsgang mit dem Axiallager 5 ausgestattet, um bei geschaltetem R-Gang (Rückwärtsgang) hohe Axialkräfte und Kippmomente aus einem Zweizahneingriff abzustützen. Im Allgemeinen ist der Einsatz des Axiallagers 5 sinnvoll, um Verschleiß aufgrund hoher Relativdrehzahlen zu dem benachbarten Bauteil zu vermeiden.

Das Radiallager 4 ist als ein zweireihiges Nadellager mit zwei Reihen 7a, b mit Nadelrollen 8 ausgebildet, welche in einem gemeinsamen Radialnadelkranz 9 angeordnet sind. Die Nadelrollen 8 des Radiallagers 4 wälzen unmittelbar auf Laufbahnen ab, die in dem Zahnrad 2 als Lagerpartner und der Welle 3 als Gegenlagerpartner eingeformt sind. Ein Radialnadelkranz 9 weist zwischen den zwei Reihen 7a, b ein Zwischenbord 10 und jeweils endseitig in der gezeigten Darstellung einen Endbord 11a und - benachbart zu dem Axiallager 5 - 11 b auf. Der Radialnadelkranz 9 ist bei dem gezeigten Ausführungsbeispiel aus Kunststoff gefertigt. Das Axiallager 5 weist dagegen nur eine Reihe 12 Nadelrollen 8 auf, welche in einem Axialnadelkranz 13 geführt sind.

Das Axiallager 5 umfasst ergänzend eine Laufscheibe 14, welche flächig auf dem Zahnrad 2 als Lagerpartner in einer Ausnehmung 15 anliegt und auf der dem Lagerpartner bzw. Zahnrad 2 abgewandten Seite einen Laufbahn für die Nadelrollen 8 des Axiallagers 5 zur Verfügung stellt. Die Seitenfläche der Wellenschulter 6 bildet die andere Laufbahn für die Nadelrollen 8 des Axiallagers 5.

Im radialen Randbereich zeigt die Laufscheibe 14 Haltenasen 16, welche sich zunächst in axialer Richtung erstrecken und dann in Richtung in Welle 3 umgebogen sind, so dass diese den Axialnadelkranz 13 haltend umgreifen. Damit wird aus der Laufscheibe 14 und dem Axialnadelkranz 13 eine selbsthaltende Baueinheit gebildet. Der Rand der Laufscheibe 14 ist nur zum Teil als Haltenasen 16 ausgebildet, verbleibende Abschnitte 17 sind hohlzylinderförmig ausgerichtet und legen sich mit ihrer radialen Außenseite an einer radialen Anlagefläche 18 der Ausnehmung 15 an.

Mit dem Ziel, die Montage von Radiallager 4 und Axiallager 5 zu vereinfachen, ist der Axialnadelkranz 13 mit Randbereichen des Radialnadelkranzes 9 mechanisch verrastet, insbesondere verclipst. Hierzu weist der Radialnadelkranz 9 Haltemittel in Form von Schnappnasen 19 auf, welche sich in axialer Richtung erstrecken und radial nach außen weisende Nasen 20 zeigen. Die Schnappnasen 19 sind in Umlaufrichtung verteilt. Der Axialnadelkranz 13 ist auf die Schnappnasen 19 aufgesteckt, so dass diese durch den Öffnungsdurchmesser des Axialnadelkranzes 13 durchgreifen und die Nasen 20 ein Abstreifen des Axialnadelkranzes 13 in Gegenrichtung formschlüssig verhindern. Die Schnappnasen 19 sind in radialer Richtung elastisch ausgeführt, so dass bei der Montage von Radiallager 4 und Axiallager 5 der Radialnadelkranz 9, insbesondere die Schnappnasen 19, durch die mittlere Öffnung des Axialnadelkranzes 13 durchgesteckt werden können, dabei radial nach innen ausgelenkt werden und sich dann selbstständig an dem Axialnadelkranz 13 verrasten.

In diesem vormontierten Zustand wird die Baueinheit, bestehend aus Radiallager 4 und Axiallager 5 auf das Zahnrad 2 als Lagerpartner aufgesetzt und dann auf der Welle 3 montiert. Auf der der Wellenschulter 6 gegenüberliegenden Seite kann optional ergänzend eine Anlaufscheibe (nicht dargestellt) auf der Welle 3 oder an dem Zahnrad 2 positioniert sein, so dass der Radialnadelkranz 9 in beiden axialen Richtungen einen Anlauf hat.

Bei einem anderen Ausführungsform kann ein weiteres Axiallager 5 auf der anderen Seite des Zahnrads 2 angeordnet sein.

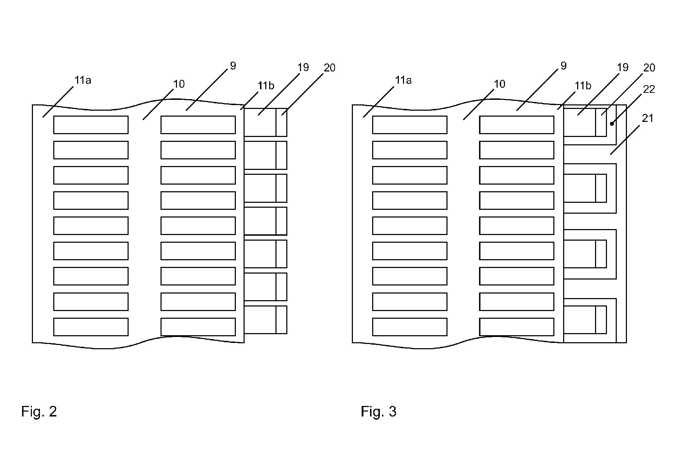

Die Figur 2 zeigt in einer stark schematisierten Draufsicht eine Abwicklung des Radialnadelkranzes 9 als eine mögliche Ausführungsform der Erfindung. Die Schnappnasen 19 sind als in axialer Richtung frei auskragende Zungen zu dem Endbord 11 b angeordnet, insbesondere angeformt und erstrecken sich beispielsweise über einen Winkelbereich von weniger als 20 °. Bei anderen Ausführungsbeispielen können sich die Schnappnasen 19 über weitere Bereiche, wie zum Beispiel größer als 60 °, größer als 90 ° und insbesondere bis zu 180 ° erstrecken. An der dem Endbord 11 b abgewandten oder distalen Seite der Schnappnasen 19 sind die Nasen 20 aufgesetzt, die als in Umlaufrichtung verlaufende Stege ausgebildet sind. Durch die einseitige Anbindung an das Endbord 11 b bzw. an den Radialnadelkranz 9 können die Schnappnasen 19 nach radial innen bei der Montage des Axialnadelkranzes 13 ausgelenkt werden.

Die Figur 3 zeigt in gleicher Darstellung wie die Figur 2 ein weiteres Ausführungsbeispiel für den Radialnadelkranz 9 in einer Abwicklung in Umfangsrichtung. Axial außenseitig zu dem Endbord 11 ist ein erweiterter Bordbereich 21 vorgesehen, in dem Fenster 22 eingebracht sind, in denen die Schnappnasen 19 in analoger Weise wie bei der Figur 2 angeordnet sind. Der Vorteil dieser Ausführungsform ist darin zu sehen, dass durch den erweiterten Bordbereich 21 die Schnappnasen 19 vor Beschädigungen bei einem axialen Anlaufen an die Wellenschulter 6 geschützt sind, da der Randbereich des erweiterten Bordbereichs 21 eine Art Stoßfänger bildet. Zudem ist auch ein Verkanten oder Verhaken ausgeschlossen, da der Randbereich in Umlaufrichtung durchgehend ausgebildet ist.

Nochmals zurückkehrend zu der Figur 1 ist darauf hinzuweisen, dass die Führung des Axiallagers 5 durch das Zahnrad 2, insbesondere die Ausnehmung 15 und im speziellen durch die radiale Anlagefläche 18 erfolgt, so dass auch unter Ausnutzung der Gesamttoleranzen in radialer Richtung eine Kontaktierung von Axialnadelkranz 13 bzw. Laufscheibe 14 und den Schnappnasen 19 im Betrieb ausgeschlossen ist, um Beschädigungen an den Schnappnasen 19 zu vermeiden. In gleicher Weise ist sichergestellt, dass die Toleranzen in axialer Richtung so bemessen sind, dass ein Anlaufen der Schnappnasen 19 an den Axialnadelkranz 13 bzw. des Endbords 11 b an die Laufscheibe 14 bzw. den Axialnadelkranz 13 ebenfalls verhindert ist.

Bei anderen Ausführungsbeispielen befindet sich auch im Bereich des Endbords 11a ein weiteres Axiallager 5 zur Abstützung des Lagerpartners, also des Zahnrades 2, an einer anderen Anlagefläche. Bei diesen Ausführungsbeispielen kann vorgesehen sein, dass der Endbord 11a ebenfalls Haltemittel, wie zum Beispiel die Schnappnasen 19 in beliebiger Ausführung aufweist, so dass ein Axialnadelkranz des weiteren Axiallagers 5 ebenso formschlüssig mit dem Radialnadelkranz 9 gekoppelt werden kann, um eine Verliersicherung zu bilden.

### Bezugszeichenliste

- 1: Lagerkombination
- 2: Zahnrad
- 3: Welle
- 4: Radiallager
- 5: Axiallager
- 6: Wellenschulter
- 7 a, b: Nadelrollenreihen
- 8: Nadelrollen
- 9: Radialnadelkranz
- 10: Zwischenbord
- 11 a, b: Endbord
- 12: Reihe
- 13: Axialnadelkranz
- 14: Laufscheibe
- 15: Ausnehmung
- 16: Haltenasen
- 17: verbleibende Abschnitte
- 18: radiale Anlagefläche
- 19: Schnappnasen
- 20: Nasen
- 21: Bordbereich
- 22: Fenster

## Patentansprüche

1. Lagerkombination (1) mit einem Radiallager (4), wobei das Radiallager (4) einen Radialkranz (9) sowie eine oder mehreren Reihen von Nadelrollen (8), Nadeln und/oder Rollen - nachfolgend zusammenfassend als Nadelrollen bezeichnet - aufweist, und mit einem Axiallager (5), wobei das Axiallager (5) einen Axialkranz (13) sowie eine oder mehrere Reihen von Nadelrollen (8), Nadeln oder Rollen - nachfolgend zusammenfassend als Nadelrollen bezeichnet - aufweist, wobei das Radiallager (4) und das Axiallager (5) ausgebildet sind, einen Lagerpartner (2) in einer axialen und in einer radialen Richtung abzustützen, **dadurch gekennzeichnet, dass** das Radiallager (4) mit dem Axiallager (5) über Haltemittel (19) verliersicher verbunden und/oder verbindbar ist.

2. Lagerkombination (1) nach Anspruch 1, **dadurch gekennzeichnet, dass** das Radiallager (4) und das Axiallager (5) zu Montagezwecken und/oder in der Einbausituation über die Haltemittel (19) verliersicher verbunden sind.

3. Lagerkombination (1) nach Anspruch 1 oder 2, **dadurch gekennzeichnet, dass** der Radialkranz (9) mit dem Axialkranz (13) über die Haltemittel (19) miteinander verliersicher verbunden und/oder verbindbar sind.

4. Lagerkombination (1) nach einem der vorhergehenden Ansprüche, **dadurch gekennzeichnet, dass** das Axiallager (4), insbesondere der Axialkranz (9), auf dem Radiallager (5), insbesondere auf dem Radialkranz (13), in axialer Richtung aufgesteckt ist.

5. Lagerkombination (1) nach Anspruch 4, **dadurch gekennzeichnet, dass** die Haltemittel (19) ausgebildet sind, das Axiallager (5), insbesondere den Axialkranz (13), gegen ein Lösen gegen die axiale Richtung zu sichern.

6. Lagerkombination (1) nach einem der vorhergehenden Ansprüche, **dadurch gekennzeichnet, dass** die Haltemittel (19) an dem Radialkranz (9) angeordnet, insbesondere einstückig angeformt, sind und an dem Axialkranz (13) angreifen.

7. Lagerkombination (1) nach einem der vorhergehenden Ansprüche, **dadurch gekennzeichnet, dass** die Haltemittel als Schnappnasen (19) und/oder Schnappnasenbereiche ausgebildet sind, die an dem Axiallager (5), insbesondere an dem Axialkranz (13) angreifen.

8. Lagerkombination (1) nach Anspruch 7, **dadurch gekennzeichnet, dass** die Schnappnasen (19) bzw. -bereiche nach radial außen gerichtet sind.

9. Lagerkombination (1) nach einem der vorhergehenden Ansprüche, **dadurch gekennzeichnet, dass** die Haltemittel (19), insbesondere die Schnappnasen (19), frei abstehend zu dem Radialkranz (9) ausgebildet sind.

10. Lagerkombination (1) nach einem der Ansprüche 1 bis 8, **dadurch gekennzeichnet, dass** der Radialkranz (9) Fensterbereiche (22) aufweist, in denen die Haltemittel, insbesondere die Schnappnasen (19) angeordnet sind.

11. Lagerkombination (1) nach einem der vorhergehenden Ansprüche, **dadurch gekennzeichnet, dass** der Radialkranz (9) aus Kunststoff gebildet ist.

12. Lagerkombination (1) nach einem der vorhergehenden Ansprüche, **dadurch gekennzeichnet, dass** das Axiallager (5) ein- oder beidseitig eine Laufscheibe (14) aufweist.

13. Lagerkombination (1) nach einem der vorhergehenden Ansprüche, **gekennzeichnet durch** ein weiteres Axiallager (5), wobei das weitere Axiallager (5) einen Axialkranz (13) sowie eine oder mehrere Reihen von Nadelrollen (8), Nadeln oder Rollen - nachfolgend zusammenfassend als Nadelrollen bezeichnet - aufweist, und wobei das weitere Axiallager (5) mit dem Radiallager (4) über Haltemittel (19) verliersicher verbunden und/oder verbindbar ist.

14. Lagerkombination (1) nach einem der vorhergehenden Ansprüche, **dadurch gekennzeichnet, dass** der Lagerpartner als ein Losrad (2) oder ein Zwischenrad (3) eines Fahrzeuggetriebes ausgebildet ist.

15. Lagerkombination (1) nach einem der vorhergehenden Ansprüche, **dadurch gekennzeichnet, dass** das oder die Axiallager (5) insbesondere zerstörungsfrei von dem Radiallager (4) demontierbar ist.
